(19)

Europäisches
Patentamt
European
Patent Office
Office européen
des brevets

(11) **EP 2 595 436 B1**

(12) **EUROPEAN PATENT SPECIFICATION**

(45) Date of publication and mention
of the grant of the patent:
**16.03.2016 Bulletin 2016/11**

(51) Int Cl.:
***H04W 64/00*** *(2009.01)*

(21) Application number: **11189146.1**

(22) Date of filing: **15.11.2011**

(54) **A method and a network node for localization of a user equipment**

Verfahren und Netzwerkknoten zur Lokalisierung eines Benutzergeräts

Procédé et noeud de réseau pour la localisation d'un équipement utilisateur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2013 Bulletin 2013/21**

(73) Proprietor: **Telefonaktiebolaget LM Ericsson
(publ)
164 83 Stockholm (SE)**

(72) Inventors:
• **Gunnarsson, Fredrik
587 50 Linköping (SE)**
• **Gustafsson, Fredrik
58 663 Linköping (SE)**

(74) Representative: **Boco IP Oy Ab
Itämerenkatu 5
00180 Helsinki (FI)**

(56) References cited:
**WO-A1-2011/082831**

• **"R2-106018; 3GPP TS 37.320 V1.1.0 (2010-10);
3GPP Technical Specification Group TSG
RANUniversal Terrestrial Radio Access (UTRA)
and Evolved Universal Terrestrial Radio Access
(E-UTRA); Radio measurement collection for
Minimization of Drive Tests (MDT); Overall
description; Stage 2 (Rel.10)", 3RD GENERATION
PARTNERSHIP PROJECT (3GPP);
TECHNICALSPECIFICATION (TS), XX, XX , no.
3GPP TSG-RAN WG2 #71bis 16 October 2010
(2010-10-16), pages 1-17, XP002660859,
Retrieved from the Internet:
URL:http://www.3gpp.org/ftp/tsg_ran/WG2_RL
2/TSGR2_71bis/Docs/ [retrieved on 2011-10-07]**
• **NTT DOCOMO: "Location information for
immediate MDT", 3GPP , 4 May 2010 (2010-05-04),
XP002679320, Retrieved from the Internet:
URL:http://www.3gpp.org/ftp/tsg_ran/WG2_RL
2/TSGR2_70/Docs/ADN_Tdoc_List_RAN2_70.ht
m**
• **HUAWEI: "MDT location control and correlation",
3GPP DRAFT; R2-103778 MDT LOCATION
CONTROL AND CORRELATION, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG2, no. Stockholm,
Sweden; 20100628, 20 June 2010 (2010-06-20),
XP050450957, [retrieved on 2010-06-20]**
• **NEC: "Accuracy of location information in MDT",
3GPP DRAFT; R2-103543, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no. Stockholm,
Sweden; 20100628, 22 June 2010 (2010-06-22),
XP050451119, [retrieved on 2010-06-22]**

EP 2 595 436 B1

**Description**

FIELD OF THE INVENTION

The present invention relates to a method and a network node for improved localization of a user equipment node in a wireless network. The invention also relates to use of the localization method in generating position estimates for a user equipment measurement report.

BACKGROUND OF THE INVENTION

The architecture of present day mobile network includes a radio access network, a core network and user equipment connecting to the radio access network. The radio access network includes radio base stations or nodes for setting up the connection to the user equipment.

Whilst the nodes of the radio access network mainly can be considered as stationary with fixed location, the user equipment is mobile and may take basically any position within the network. Planning, configuring, optimizing, and maintaining a radio access network, the mobile operator must ensure a radio propagation behavior in the system that corresponds to the location of user equipment nodes in the network. Today, operators resort to planning tools to dimension and plan their networks according to a specific business strategy. The approach based on planning tools and prediction is, however, not fully accurate. Reasons for the inaccuracies are imperfections in the used geographic data, simplifications and approximations in the applied propagation models, and changes in the environment, e.g., construction/demolition or seasonal effects (foliage changes). Furthermore, changes in the traffic distribution and user profiles can lead to inaccurate prediction results. The above mentioned shortcomings force operators to continuously optimize their networks using measurements and statistics, and to perform drive/walk tests. Drive/walk testing provides a picture of the end user perception in the field and enables the operator to identify locations causing poor performance and their corresponding cause (e.g., incorrect tilt or handover settings). Drive/walk tests are, however, not ideal since only a limited part of the network can be analyzed due to access restrictions and the cost and time involved. Further, only a snapshot in time of the conditions in the field is captured. Wireless network operators today have considerable manual effort in network management, e.g., configuring the radio access network. These manual efforts are costly and consume a great part of operational expenditures (OPEX).

e-UTRAN (evolved UMTS Terrestrial Radio Access Network) is a future wireless access network standard optimized for packet data and providing higher data rates. An important E-UTRAN requirement from the operators' side is a significant reduction of the manual effort in network management for this future wireless access system. This involves automation of the tasks typically involved in operating a network, e.g., planning, verification through, e.g., drive/walk testing, and optimization.

A method for improving network management in e-UTRAN is to use the user equipment (UE) reports. The UE can report anything that can be configured via the radio resource control measurement control and reporting procedures. A standardization of such UE reports is carried out within 3GPP. The user equipment node collects data to determine observed service quality, e.g., RF signal strength, along with the location where the measurement was taken.

A prior art localization framework in the E-UTRAN is based on transactions via a serving mobile location centre (SMLC) or an enhanced SMLC (E-SMLC). The positioning protocols used to request location information from the SMLC operate on a transaction basis, which means that a request-response exchange is executed between the client requesting the location information and the server providing the location response. Thus, each localization requires its own request. An alternative localization method is based on snapshot measurements from the user equipment node and one or more base stations (eNB). However, the location of a user equipment node based on a snapshot does not provide a sufficiently accurate localization for the UE reporting purposes.

A prior art method for localization of a wireless device is disclosed in R2-106018; 3GPP TS 37.320 V1.1.0 (2010-10); Radio measurement collection for Minimization of Drive Tests (MDT); no. 3GPP TSG-RAN WG2#71 bis 16 October 2010 (2010-10-16) XP2660859 discloses a method of forming a trace of localization measures for a wireless device over a time period and using this trace in the positioning of the wireless device.

The prior art document of NTT DOCOMO: "Location information for immediate MDT", 3GPP, 4 May 2010 (2010-05-04) XP002679320, discloses how location information can be triggered by the network for MDT purposes.

Use of localization accuracies for the purposes of creating a high quality coverage map is presented in NEC: "Accuracy of location information in MDT", 3GPP DRAFT; R2-103543, 3GPP MOBILE COMPETENCE CENTRE; 650 ROUTE DES LUCIOLES; F-06921 SOPHIA_ANTIPOLIS, CEDEX; FRANCE, vol. RAN WG2, no. Stockholm, Sweden; 20100628, 22 June 2010 (2010-06-22), XP50451119.

SUMMARY

It is an object of the present invention to provide improved methods and arrangements for localizing user equipment node with improved accuracy.

The object is achieved by a method in a network node. The method enables localization at a specific time instant of a user equipment node in the wireless network. In an embodiment of the invention a first localization measurement time and a second localization measurement time are included amongst a plurality of localization measurement times, wherein a specific time instant is comprised in a time interval from the first localization measurement time to the second localization measurement time. A first localization related measure is received for the user equipment node at the first localization measurement time and one or more second localization related measures are received for the user equipment node at the second localization measurement time. A trace of localization related measures are formed for the user equipment node over the time interval from the first localization measurement time to the second localization measurement time. One or more first localization accuracies for the one or more first localization related measures and one or more second localization accuracies for the one or more second localization related measures are determined. The first and second localization accuracies are included in the trace of localization related measures. The location of the user equipment node at the specific time instant is estimated from a localization related measure represented in the trace based on a localization accuracy of the localization related measure.

The object is also achieved by a network node in a mobile network wherein the inventive method may be performed. The network node comprises means for receiving localization related measures for a user equipment node at a localization measurement time. Means for forming a trace of localization related measures for the user equipment node are included in the network node. The network node further include means for estimating the location of the user equipment node at a single time instant from a localization related measure represented in the trace.

It is another object of the invention to improve user equipment measurement reporting by improving a position estimate included in such reports.

This object is achieved through use of the inventive localization method for generating a position estimate to include in a user equipment measurement report.

The invention enables efficient use of trace information to perform network-based localization of user equipment nodes.

BRIEF DESCRIPTION OF THE DRAWINGS

Figure 1    A radio system architecture
Figure 2    A network management system
Figure 3    Flow chart of an embodiment of the inventive method
Figure 4    An embodiment of a network node architecture

DETAILED DESCRIPTION

In the following, the invention will be described for e-UTRAN, the air interface of the 3GPP's (3rd Generation Partnership Project) LTE (Long Term Evolution) upgrade path for mobile networks. However, it should be noted that the invention can be applied to other types of networks and standards, e.g., GSM and UTRAN. E-UTRAN is used merely as an exemplifying standard to illustrate the main concept.

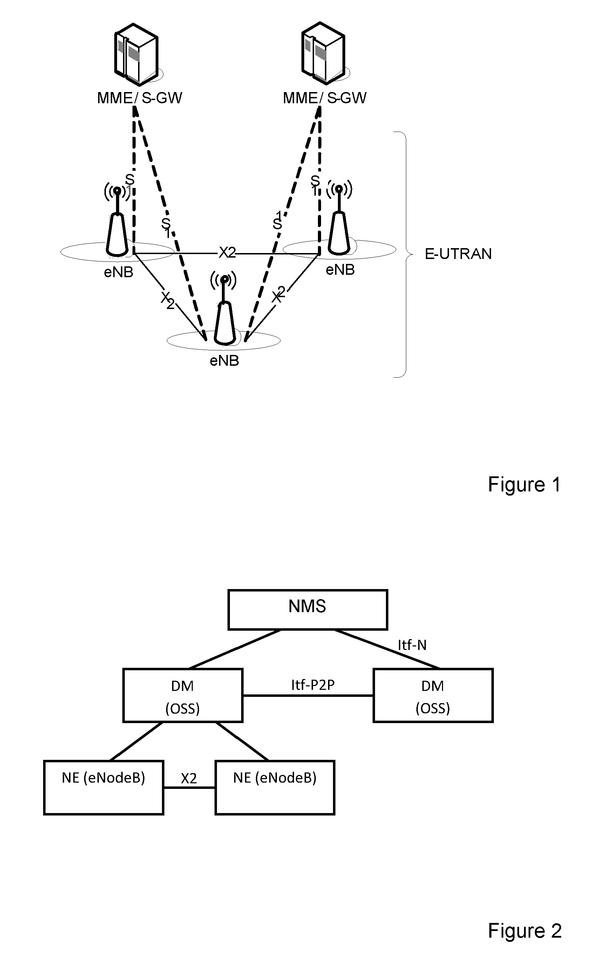

Figure 1 discloses the architecture of such a Long Term Evolution LTE radio system. The E-UTRAN is made up of eNB nodes, which may be connected to each other. Each eNB contains at least one radio transmitter, receiver, control section and power supply. In addition to radio transmitters, and receivers, eNBs contain resource management and logic control functions that allow eNBs to directly communicate with each other via an X2 interface. eNB functions include radio resource management - RRM, radio bearer control, radio admission control - access control, connection mobility management, resource scheduling between UEs and eNB radios, header compression, link encryption of the user data stream, packet routing of user data towards its destination (usually to the EPC or other eNBs), scheduling and transmitting paging messages (incoming calls and connection requests), broadcast information coordination (system information), and measurement reporting (to assist in handover decisions).

Each eNB is composed of an antenna system (typically a radio tower), building, and base station radio equipment. Base station radio equipment consists of RF equipment (transceivers and antenna interface equipment), controllers, and power supplies.

User equipment nodes in the radio network connect to the radio access network through the eNB nodes. User equipment nodes- UE - can be many types of devices ranging from simple mobile telephones to digital televisions. In the initial cell selection process, no knowledge about RF channels carrying an E-UTRA signal is available in the user equipment. In this case the UE scans the E-UTRA frequency bands to find a suitable cell. Only the cell with the strongest signal per carrier will be selected by the UE.

Whilst communicating in the network, the user equipment nodes may be asked to report the observed service quality along with the locations where the measurements are taken. The reports are denoted as user equipment reports, UE reports. The UE reports are received in a network management system NMS according to Figure 2. The node elements (NE), also referred to as eNodeB or eNB, are managed by a domain manager (DM), also referred to as the operation and support system (OSS). The user equipment reports relate to transmissions from a node element (NE) antenna.

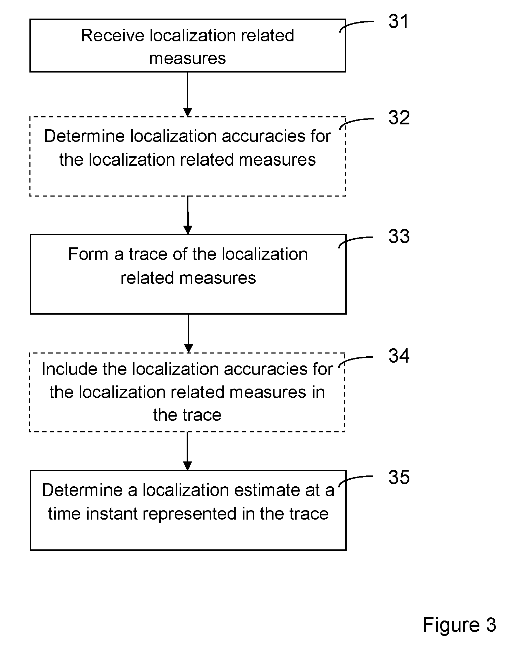

The localization of a user equipment node may be established by an embodiment of a localization method disclosed in the flowchart in Figure 3.

Localization related measures are determined by a base station for a user equipment node in the coverage area of the base station. Such localization related measures may include received signal strength or other suitable localization related measures, e.g., a round-trip time estimate from user equipment in one or more sectors at the same base station or a time difference of arrival reported by a user equipment considering pairs of base stations. The localization related measures may preferably also include measurements from the user equipment that reported to the base station. The localization related measures could include information on received signal strength from a user equipment node measured on one or more sectors at the same base station. This information may be used together with antenna information to determine possible angles between the user equipment node and the base station. The localization related measures could also include a time difference of arrival reported by a user equipment considering pairs of base stations. The localization related measures are transferred to a network management system. In a first step 31 in the network management system one or more first localization related measures for the user equipment node at a first localization measurement time (t1) and one or more second localization related measures for the user equipment node at a second measurement time (t2) are received.

In an optional step 32, localization accuracies are determined for localization related measures. When the localization related measures are based on received signal strength measurements from the user equipment in combination with antenna information, the localization accuracy information could be an angle estimation accuracy derived from the received signal strength and the antenna information.

In another embodiment of the invention, wherein the localization related measures relate to round-trip time estimates from one or more sectors of a base station, the localization accuracies are based on base station estimation information, such as uplink synchronization accuracy and user equipment processing assumptions, for example concerning the assumed synchronization accuracy in the UE with respect to received downlink signals.

In an embodiment of the invention wherein the localization related measures are time difference of arrival reported by the user equipment considering pairs of base stations; the localization accuracy is the time synchronization estimation accuracy. The UE synchronizes to two different base stations and compare the difference. The total accuracy is twice the time synchronization accuracy. The localization accuracy can either be assumed or modeled based on reported signal strength and quality per cell. It could also be associated to the mobile capabilities that are signaled to the base station from the mobile during connection establishment.

In step 33, the network management system or the base station forms a trace of the localization related measures from a sequence of measurements, starting at a first localization measurement time (t1) to a second localization measurement time (t2). The time interval from the first localization measurement time (t1) to the second localization measurement time (t2) includes a single time instant (t). In one embodiment, the base station forwards each, or a set of measurements, and the network management system puts together a trace from all received measurements. Note that each set of measurement could come from different base stations if the mobile moves around and changes serving base station.

In another embodiment, the serving base station puts together the trace and forwards to the network management system.

The network management system estimates a position of the user equipment at a time instant during the time interval covered by the first localization measurement time (t1) and the second localization measurement time (t2).

Given a trace of $T$ localization measurement, where $y_t$ denotes the localization measurement at a particular time step $t$ of the trace, where $t=1,...,T$. The measurement is a vector with elements $y_t^{(i)}$. The localization measurements trace is denoted $y_{1:T}$.

Given the localization measurement $y_t$, $Y_t$ denotes the accuracy-related information associated with the localization measurement.

The objective is to estimate the location of the user equipment at time instants during the time interval covered by the localization measurement time instants using the localization and accuracy information. Let the vector $x_T$ denote the information about the user equipment to be estimated using the available information. Examples of elements in this vector include coordinates in the plane as well as velocity including directivity in the plane. This can be expressed as the following function

$$x_\tau = f\left(y_{t1:t2};Y_{t1:t2}\right)$$

where $T \leq t2$ and $t1 \leq t2$ meaning that the location estimate is based on at least one localization information from a time instant later than $T$.

Exemplifying embodiments of such functions include a weighted average, a Kalman smother and a particle smoother.

A basic form of smoothing is via a non-causal finite-impulse response (FIR) filter. Assume that $y_t$ in fact is a location estimate and $C_t$ is the covariance estimate.

The covariance matrix $C_t$ with entry (i,j) defined by

$$C_t^{(I,j)} = E\{(y_t^{(i)} - E\{y_t^{(i)}\})\,(y_t^{(j)} - E\{y_t^{(j)}\})\}$$

Element-wise smoothing can for example be implemented as the following exponential smoother with one term from a future time instant and one from a past time instant.

$$\hat{x}_t^{(i)} = \left(\frac{\alpha}{C_{t-1}^{(i,i)}}y_{t-1}^{(i)} + \frac{1-2\alpha}{C_t^{(i,i)}}y_t^{(i)} + \frac{\alpha}{C_{t+1}^{(i,i)}}y_{t+1}^{(i)}\right)\Bigg/\left(\frac{1}{C_{t-1}^{(i,i)}} + \frac{1}{C_t^{(i,i)}} + \frac{1}{C_{t+1}^{(i,i)}}\right),\ t=2,\dots,T\text{-}1$$

Kalman smothering is optimal when the dynamics of the measurement and the movements are linear and subject to additive Gaussian noise.

One common example of such a linear system due to mobility of an object is a model based on random acceleration. This means that the acceleration in the x and y direction is not correlated between time steps and zero-mean Gaussian with variance $\Box_a^2$. If the state vector

$$x_t = [p_x,\ p_y,\ v_x,\ v_y]^T$$

and the sample time is $T_s$, then the $A_t$ and $B_t$ matrices are given by

$$A_t = \begin{pmatrix} 1 & 0 & T_s & 0 \\ 0 & 1 & 0 & T_s \\ 0 & 0 & 1 & 0 \\ 0 & 0 & 0 & 1 \end{pmatrix}, B_t = \begin{pmatrix} T_s^2 & 0 \\ 0 & T_s^2 \\ T_s & 0 \\ 0 & T_s \end{pmatrix},$$

Moreover, the model also includes measurement noise assumptions, such that the measurement errors are uncorrelated between time steps, zero-mean Gaussian with covariance matrix $R_t$.

The model can be summarized as

$$x_{t+1} = A_t x_t + B_t v_t$$

$$y_t = h(x_t) + e_t$$

$$Var\{v_t\} = Q_t = \begin{pmatrix} \sigma_a^2 & 0 \\ 0 & \sigma_a^2 \end{pmatrix}$$

$$Var\{e_t\} = R_t$$

Commonly, the measurement equation is nonlinear in the states ($h(x_t)$). This can be handled by estimating a linear model locally around the current state estimate. By partially differentiating with respect to each state, and enter the current state estimate, a linear measurement equation

$$x_{t+1} = A_t x_t + B_t v_t$$

$$y_t = C_t x_t + e_t$$

$$C_t = \left.\frac{\partial h}{\partial x}\right|_{x=x_{t|t-1}}$$

$$Var\{v_t\} = Q_t = \begin{pmatrix} \sigma_a^2 & 0 \\ 0 & \sigma_a^2 \end{pmatrix}$$

$$Var\{e_t\} = R_t$$

The Kalman filter can be seen as a filter in two phases, first a time update and then a measurement update

Time update

$$\hat{x}_{t+1|t} = A_t \hat{x}_{t|t}$$

$$P_{t+1|t} = A_t P_{t|t} A_t^T + Q_t$$

Measurement update:

$$\tilde{y}_t = y_t - C_t \hat{x}_{t|t-1}$$

$$S_t = C_t P_{t|t-1} C_t^T + R_t$$

$$K_t = P_{t|t-1} C_t^T S_t^{-1}$$

$$\hat{x}_{t|t} = \hat{x}_{t|t-1} + K_t \tilde{y}_t$$

$$P_{t|t} = \left(I - K_t C_t\right) P_{t|t-1}$$

Starting from initial assumptions $\hat{x}_{0|0}$ and $P_{0|0}$. The initial position assumption (first two elements of $\hat{x}_{0|0}$) could be based on less accurate methods such as the location and antenna direction of the serving cell, the center of gravity of the serving cell, and assumption about the velocity (last two elements of $\hat{x}_{0|0}$) for example not being mobile meaning a zero velocity. The initial covariance $P_{0|0}$ could be set with respect to those crude estimates, for example reflecting the cell radius as well as how likely that the mobile is stationary.

The Kalman smoother provides an optimal estimate $\hat{x}_{t|t2}$ with $t2>t$. One example is the Rauch-Tung_Streibel (RTS). It is based on two passes - a forward pass and a backward pass. The forward pass is a regular Kalman filter, but all information per time instant is stored to be used for the calculations backward in time. When the measurement data has been considered first with increasing time, and then backwards with decreasing time, then the estimate of the position and velocity of each time instant is a function of all measurements both associated to earlier time instants and later time instants

$$\widetilde{A}_t = A_t^{-1}\left(I - Q_t P_{t+1|t}^{-1}\right)$$

$$\widetilde{K}_t = A_t^{-1} Q_t P_{t+1|t}^{-1}$$

$$\hat{x}_{t|n} = \widetilde{A}_t \hat{x}_{t+1|n} + \widetilde{K}_t \hat{x}_{t+1|t}$$

Other embodiments of the inventive method includes generating one or more further localization related measures in the time interval from the first localization measurement time (t1) to the second localization measurement time (t2) in order to improve the accuracy for the trace of localization measurement.

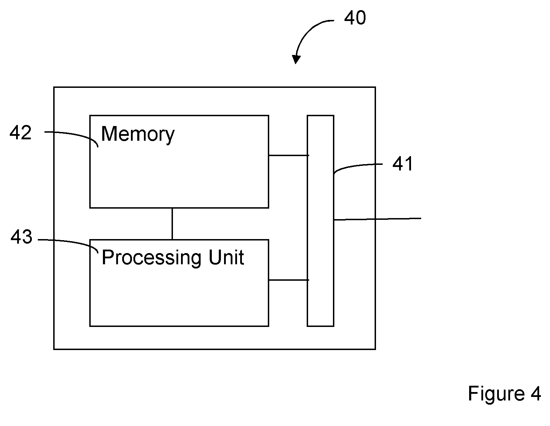

Figure 4 discloses a network node 40 for performing one or more embodiments of the inventive method. Such a network node includes an interface 41, a memory 42 and a processor 43. The interface 41 is configured to receive arranged to receive localization related measures for a user equipment node at a localization measurement time. The memory 42 stores received localization related measures.

A trace of localization related measures are formed in the processor 43. The trace is based on a set of localization measures stored in the memory 42, including at least a first localization related measure determined at a first localization related measurement time (t1) and a second localization related measure determined at a second localization related measurement time (t2) later than the first measurement time (t1). The processor 43 is also arranged to determine and associate accuracy-related information to the localization related measures and to include the localization accuracies in the trace.

The localization method are used to improve the accuracy for user equipment location estimates included with user equipment measurement reports and to provide a network based user equipment localization based on traces.

**Claims**

1. A method in a network node in a wireless network for localization of a user equipment node at a specific time instant (t), comprising the steps of:

   for a plurality of localization measurement times including a first localization measurement time (t1) and a second localization measurement time (t2), wherein the specific time instant (t) is comprised in a time interval from the first localization measurement time (t1) to the second localization measurement time (t2);

   - receiving (31) one or more first localization related measures for the user equipment node at the first localization measurement time (t1) and one or more second localization related measures for the user equipment node at the second localization measurement time (t2); and
   - forming (33) a trace of localization related measures for the user equipment node over the time interval from the first localization measurement time to the second localization measurement time;
   **characterized in the further steps of:**
   - determining (32) one or more first localization accuracies for the one or more first localization related measures and determining one or more second localization accuracies for the one or more second localization related measures,

- including (34) the one or more first localization accuracies and the one or more second localization accuracies in the trace of localization related measures; and.
- estimating (35) the location of the user equipment node at the specific time instant from a localization related measure given in the trace based on a localization accuracy of the localization related measure.

2. A method according to claim 1, wherein the one or more first localization related measure and the one or more second localization related measure includes received signal strength.

3. A method according to any of the preceding claims, wherein the one or more first localization related measure and the one or more second localization related measure includes antenna information.

4. A method according to any of the preceding claims, wherein the one or more first localization accuracy and the one or more second localization accuracy is derived from received single strength and antenna information.

5. A method according to any of the preceding claims, wherein the one or more first localization related measure and the one or more second localization related measure includes a round-trip time estimate from one or more sectors associated with a base station.

6. A method according to any of the preceding claims, wherein the one or more first localization related measure and the one or more second localization related measure includes a time difference of arrival report from a user equipment considering pairs of cells.

7. A method according to claim 6, wherein the one or more first localization accuracy, and the one or more second localization accuracy is a time synchronization estimation accuracy.

8. A method according to any of claims 1-3, wherein the one or more first localization accuracy and the one or more second localization accuracy is based on reported signal strength and quality per cell.

9. A method according to any of the preceding claims, including the step of generating a one or more further localization related measures in the time interval from the first localization measurement time (t1) to the second localization measurement time (t2).

10. A network node (40) in a mobile network, comprising

- an interface (41) adapted to receive user equipment node localization related measures at a localization measurement time and to receive one or more user localization accuracies for the one or more localization related measures;
- a memory (42) adapted to store the user equipment node localization related measures and the respective localization accuracies; and
- a processor (43) adapted to form a trace of localization related measures and include the respective localization accuracies for the localization related measures, for the user equipment node, over a time interval from a first localization related measurement time (t1) to a second localization measurement time (t2); and to estimate the location of the user equipment node at a specific time instant from a localization related measure represented in the trace based on a localization accuracy of the localization related measure.

11. A localization method according to claims 1-9 used to generate a position estimate to be included with a user equipment measurement report.

## Patentansprüche

1. Verfahren in einem Netzwerkknoten in einem drahtlosen Netzwerk zur Lokalisierung eines Benutzergerätknotens in einem spezifischen Zeitpunkt (t), umfassend die Schritte des:

für eine Mehrzahl von Lokalisierungsmesszeitpunkten, umfassend einen ersten Lokalisierungsmesszeitpunkt (t1) und einen zweiten Lokalisierungsmesszeitpunkt (t2), wobei der spezifische Zeitpunkt (t) in einer Zeitspanne vom ersten Lokalisierungsmesszeitpunkt (t1) zum zweiten Lokalisierungsmesszeitpunkt (t2) inbegriffen ist;

- Empfangens (31) einer oder mehrerer erster lokalisierungsbezogener Messungen für den Benutzergerätknoten im ersten Lokalisierungsmesszeitpunkt (t1) und einer oder mehrerer zweiter lokalisierungsbezogener Messungen für den Benutzergerätknoten im zweiten Lokalisierungsmesszeitpunkt (t2); und
- Bildens (33) einer Folge von lokalisierungsbezogenen Messungen für den Benutzergerätknoten innerhalb der Zeitspanne vom ersten Lokalisierungsmesszeitpunkt zum zweiten Lokalisierungsmesszeitpunkt;

**gekennzeichnet durch** die weiteren Schritte des:

- Bestimmens (32) einer oder mehrerer ersten Lokalisierungsgenauigkeiten für die eine oder mehreren ersten lokalisierungsbezogenen Messungen und Bestimmens einer oder mehrerer zweiter Lokalisierungsgenauigkeiten für die eine oder mehreren zweiten lokalisierungsbezogenen Messungen,
- Einbeziehens (34) der einen oder mehreren ersten Lokalisierungsgenauigkeiten und der einen oder mehreren zweiten Lokalisierungsgenauigkeiten in die Folge der lokalisierungsbezogenen Messungen;

und

- Schätzens (35) der Position des Benutzergerätknotens im spezifischen Zeitpunkt aus einer lokalisierungsbezogenen in der Verfolgung gegebenen Messung, auf der Basis einer Lokalisierungsgenauigkeit der lokalisierungsbezogenen Messung.

2. Verfahren nach Anspruch 1, wobei die eine oder mehreren ersten lokalisierungsbezogenen Messungen und die eine oder mehreren zweiten lokalisierungsbezogenen Messungen die empfangene Signalstärke umfassen.

3. Verfahren nach einem der vorgehenden Ansprüche, wobei die eine oder mehreren ersten lokalisierungsbezogenen Messungen und die eine oder mehreren zweiten lokalisierungsbezogenen Messungen eine Antenneninformation umfassen.

4. Verfahren nach einem der vorgehenden Ansprüche, wobei die eine oder mehreren ersten Lokalisierungsgenauigkeiten und die eine oder mehreren zweiten Lokalisierungsgenauigkeiten von der empfangenen Signalstärke und Antenneninformation abgeleitet sind.

5. Verfahren nach einem der vorgehenden Ansprüche, wobei die eine oder mehreren ersten lokalisierungsbezogenen Messungen und die eine oder mehreren zweiten lokalisierungsbezogenen Messungen eine Umlaufzeitschätzung von einem oder mehreren der Basisstation zugeordneten Sektoren umfassen.

6. Verfahren nach einem der vorgehenden Ansprüche, wobei die eine oder mehreren ersten lokalisierungsbezogenen Messungen und die eine oder mehreren zweiten lokalisierungsbezogenen Messungen eine Ankunftszeitdifferenzmeldung von einem ein Paar Zellen berücksichtigenden Benutzergerät umfassen.

7. Verfahren nach Anspruch 6, wobei die eine oder mehreren ersten Lokalisierungsgenauigkeiten und die eine oder mehreren zweiten Lokalisierungsgenauigkeiten eine Zeitsynchronisationsschätzungsgenauigkeit sind.

8. Verfahren nach einem der Ansprüche 1-3, wobei die eine oder mehreren ersten Lokalisierungsgenauigkeiten und die eine oder mehreren zweiten Lokalisierungsgenauigkeiten auf einer gemeldeten Signalstärke und Qualität pro Zelle basiert sind.

9. Verfahren nach einem der vorgehenden Ansprüche, umfassend den Schritt des Bildens einer oder mehrerer weiterer lokalisierungsbezogener Messungen in der Zeitspanne vom ersten Lokalisierungsmesszeitpunkt (t1) zum zweiten Lokalisierungsmesszeitpunkt (t2).

10. Netzwerkknoten (40) in einem mobilen Netzwerk, umfassend

- eine Schnittstelle (41), welche dazu eingerichtet ist, benutzergerätknotenlokalisierungsbezogene Messungen in einem Lokalisierungsmesszeitpunkt zu empfangen und eine oder mehrere Benutzerlokalisierungsgenauigkeiten für die eine oder mehreren lokalisierungsbezogenen Messungen zu empfangen;
- einen Speicher (42), welcher dazu eingerichtet ist, die benutzergerätknotenlokalisierungsbezogenen Messungen und die jeweiligen Lokalisierungsgenauigkeiten zu speichern; und

- einen Prozessor (43), welcher dazu eingerichtet ist, eine Folge von lokalisierungsbezogenen Messungen zu bilden, und die jeweiligen Lokalisierungsgenauigkeiten für den Benutzergerätknoten, innerhalb einer Zeitspanne von einem ersten lokalisierungsbezogenen Messzeitpunkt (t1) zu einem zweiten Lokalisierungsmesszeitpunkt (t2), zu umfassen; und die Position des Benutzergerätknotens in einem spezifischen Zeitpunkt, aus einer in der Folge dargestellten lokalisierungsbezogenen Messung, auf der Basis einer Lokalisierungsgenauigkeit der lokalisierungsbezogenen Messung, zu schätzen.

11. Lokalisierungsverfahren nach Ansprüchen 1-9, welches zum Bilden einer in einer Benutzergerätmessungsmeldung einzuschließenden Positionsschätzung benutzt wird.

**Revendications**

1. Procédé mis en oeuvre dans un noeud de réseau au sein d'un réseau sans fil pour la localisation d'un noeud d'équipement d'utilisateur à un instant spécifique (t), comprenant les étapes ci-dessous consistant à :

pour une pluralité de temps de mesure de localisation incluant un premier temps de mesure de localisation (t1) et un second temps de mesure de localisation (t2), dans lequel l'instant spécifique (t) est compris dans un intervalle de temps allant du premier temps de mesure de localisation (t1) au second temps de mesure de localisation (t2) :

- recevoir (31) une ou plusieurs premières mesures connexes à la localisation pour le noeud d'équipement d'utilisateur au premier temps de mesure de localisation (t1), et une ou plusieurs secondes mesures connexes à la localisation pour le noeud d'équipement d'utilisateur au second temps de mesure de localisation (t2) ; et
- former (33) un tracé de mesures connexes à la localisation pour le noeud d'équipement d'utilisateur sur l'intervalle de temps allant du premier temps de mesure de localisation au second temps de mesure de localisation ;

**caractérisé par** les étapes supplémentaires ci-dessous consistant à :

- déterminer (32) une ou plusieurs premières précisions de localisation pour ladite une ou lesdites plusieurs premières mesures connexes à la localisation et déterminer une ou plusieurs secondes précisions de localisation pour ladite une ou lesdites plusieurs secondes mesures connexes à la localisation ;
- inclure (34) ladite une ou lesdites plusieurs premières précisions de localisation et ladite une ou lesdites plusieurs secondes précisions de localisation dans le tracé de mesures connexes à la localisation ; et
- estimer (35) l'emplacement du noeud d'équipement d'utilisateur à l'instant spécifique à partir d'une mesure connexe à la localisation donnée dans le tracé, sur la base d'une précision de localisation de la mesure connexe à la localisation.

2. Procédé selon la revendication 1, dans lequel ladite une ou lesdites premières mesures connexes à la localisation et ladite une ou lesdites secondes mesures connexes à la localisation incluent une intensité de signal reçue.

3. Procédé selon l'une quelconque des revendications précédentes, dans lequel ladite une ou lesdites premières mesures connexes à la localisation et ladite une ou lesdites secondes mesures connexes à la localisation incluent des informations d'antenne.

4. Procédé selon l'une quelconque des revendications précédentes, dans lequel ladite une ou lesdites premières précisions de localisation et ladite une ou lesdites secondes précisions de localisation sont dérivées d'une intensité de signal reçue et d'informations d'antenne.

5. Procédé selon l'une quelconque des revendications précédentes, dans lequel ladite une ou lesdites premières mesures connexes à la localisation et ladite une ou lesdites secondes mesures connexes à la localisation incluent une estimation de temps de propagation en boucle à partir d'un ou plusieurs secteurs associés à une station de base.

6. Procédé selon l'une quelconque des revendications précédentes, dans lequel ladite une ou lesdites premières mesures connexes à la localisation et ladite une ou lesdites secondes mesures connexes à la localisation incluent un rapport de différence de temps d'arrivée provenant d'un équipement d'utilisateur tenant compte de paires de cellules.

**7.** Procédé selon la revendication 6, dans lequel ladite une ou lesdites premières précisions de localisation et ladite une ou lesdites secondes précisions de localisation correspondent à une précision d'estimation de synchronisation temporelle.

**8.** Procédé selon l'une quelconque des revendications 1 à 3, dans lequel ladite une ou lesdites premières précisions de localisation et ladite une ou lesdites secondes précisions de localisation sont basées sur une intensité de signal signalée et une qualité par cellule signalée.

**9.** Procédé selon l'une quelconque des revendications précédentes, incluant l'étape consistant à générer une ou plusieurs mesures supplémentaires connexes à la localisation dans l'intervalle de temps allant du premier temps de mesure de localisation (t1) au second temps de mesure de localisation (t2).

**10.** Noeud de réseau (40) dans un réseau mobile, comprenant :

- une interface (41) apte à recevoir des mesures connexes à la localisation de noeud d'équipement d'utilisateur à un temps de mesure de localisation, et à recevoir une ou plusieurs précisions de localisation d'utilisateur pour ladite une ou lesdites plusieurs mesures connexes à la localisation ;
- une mémoire (42) apte à stocker les mesures connexes à la localisation de noeud d'équipement d'utilisateur et les précisions de localisation respectives ; et
- un processeur (43) apte à former un tracé de mesures connexes à la localisation et à inclure les précisions de localisation respectives pour les mesures connexes à la localisation, pour le noeud d'équipement d'utilisateur, sur un intervalle de temps allant d'un premier temps de mesure connexe à la localisation (t1) à un second temps de mesure connexe à la localisation (t2) ; et à estimer l'emplacement du noeud d'équipement d'utilisateur à un instant spécifique à partir d'une mesure connexe à la localisation représentée dans le tracé, sur la base d'une précision de localisation de la mesure connexe à la localisation.

**11.** Procédé de localisation selon les revendications 1 à 9, utilisé en vue de générer une estimation de position à inclure dans un rapport de mesure d'équipement d'utilisateur.

MME/ S-GW

MME/ S-GW

E-UTRAN

S1

S1

S1

S1

X2

eNB

eNB

X2

X2

eNB

Figure 1

NMS

Itf-N

DM
(OSS)

Itf-P2P

DM
(OSS)

NE (eNodeB)

X2

NE (eNodeB)

Figure 2

```
┌─────────────────────────────────┐ ── 31
│   Receive localization related  │
│            measures             │
└─────────────────────────────────┘
                 │
                 ▼
┌ ─ ─ ─ ─ ─ ─ ─ ─ ─ ─ ─ ─ ─ ─ ─ ─ ┐ ── 32
   Determine localization accuracies for
│   the localization related measures │
└ ─ ─ ─ ─ ─ ─ ─ ─ ─ ─ ─ ─ ─ ─ ─ ─ ┘
                 │
                 ▼
┌─────────────────────────────────┐ ── 33
│    Form a trace of the localization │
│           related measures          │
└─────────────────────────────────┘
                 │
                 ▼
┌ ─ ─ ─ ─ ─ ─ ─ ─ ─ ─ ─ ─ ─ ─ ─ ─ ┐ ── 34
   Include the localization accuracies for
│   the localization related measures in │
              the trace
└ ─ ─ ─ ─ ─ ─ ─ ─ ─ ─ ─ ─ ─ ─ ─ ─ ┘
                 │
                 ▼
┌─────────────────────────────────┐ ── 35
│  Determine a localization estimate at a │
│  time instant represented in the trace  │
└─────────────────────────────────┘
```

Figure 3

40

42 — Memory

41

43 — Processing Unit

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Radio measurement collection for Minimization of Drive Tests (MDT). *R2-106018; 3GPP TS 37.320 V1.1.0,* October 2010
- *3GPP TSG-RAN WG2#71,* 16 October 2010

- *Location information for immediate MDT'', 3GPP,* 04 May 2010
- Accuracy of location information in MDT. 3GPP DRAFT; R2-103543. MOBILE COMPETENCE CENTRE, 22 June 2010